# EUROPEAN PATENT APPLICATION

(11) **EP 4 086 658 A1**
(43) Date of publication of application: **09.11.2022**
(21) Application number: 20865739.5
(22) Date of filing: 03.01.2020
(51) Int. Cl.: G01S 7/481

(54) **LASER TRANSCEIVING MODULE AND LIDAR**

(71) Applicant: Suteng Innovation Technology Co., Ltd, Shenzhen City Guangdong 518000 (CN)
(72) Inventor: WANG, Ji, Shenzhen, Guangdong 518000 (CN)
(74) Representative: Ran, Handong
(86) International application number: PCT/CN2020/070281
(87) International publication number: WO 2021/051723

(57) **Abstract**

A laser transceiving module (100) and a LiDAR (200) are provided, relating to the technical field of LiDAR. The laser transceiving module (100) includes a housing (10), and an emitting module (1), a laser splitting module (2), and a receiving module (3) that are fixed in the housing (10). Emergent laser signals from the emitting module (1) are emitted outwards after passing through the laser splitting module (2), and are reflected by a target object (300) in a detection region to return as reflected laser signals. The reflected laser signals are received and deflected by the laser splitting module (2), and then received by the receiving module (3). An extinction structure (5) is arranged between the emitting module (1) and the laser splitting module (2). The extinction structure (5) is configured to prevent emergent laser signals reflected by the laser splitting module (2) from emitting toward the receiving module (3). The laser transceiving module (100) can reduce influence of stray light therein on the detection ability of the laser transceiving module (100).

## Description

### TECHNICAL FIELD

The present invention relates to the technical field of LiDAR, and more particularly, to a laser transceiving module and LiDAR.

### BACKGROUND

LiDAR is an active detection sensor. The working principle of the LiDAR is to measure relevant information of a target object by emitting a laser beam from an emitting module and receiving echo signals of the target object detected by a receiving module, such as measuring a distance, an orientation, a height, a speed, a posture, even a shape and other information.

In the LiDAR in the prior art, a problem that the LiDAR has a poor detection ability or is even unable to detect due to the influence of stray light is inevitable. The stray light that exists in the LiDAR usually comprises external stray light and internal stray light. The external stray light is generally formed by laser of other LiDARs or sunlight entering the LiDAR. The internal stray light is mainly formed by emergent laser signals or reflected laser signals being scattered by the inner wall of a structure or being reflected or scattered by the surface of an optical element. Either the internal stray light or the external stray light will affect the accuracy and ranging ability of the LiDAR.

### SUMMARY

Based on the shortcomings of the prior art, an objective of the present invention is to provide a laser transceiving module and a LiDAR that are capable of reducing stray light, thereby improving the accuracy and ranging ability of the LiDAR.

According to a first aspect of the present invention, the present invention proposes a laser transceiving module, comprising a housing, an emitting module, a laser splitting module, and a receiving module that are fixed in the housing. Emergent laser signals from the emitting module are emitted outwards after passing through the laser splitting module, reflected by a target object in a detection region and returned as reflected laser signals. The reflected laser signals are received and deflected by the laser splitting module and received by the receiving module. An extinction structure is arranged between the emitting module and the laser splitting module. The extinction structure is configured to prevent the emergent laser signals reflected by the laser splitting module from projecting toward the receiving module.

Further, the extinction structure is arranged at the housing. The extinction structure comprises a first reflecting surface and a second reflecting surface arranged at an angle with respect to the first reflecting surface. One end of the first reflecting surface is close to the emitting module, and another end of the first reflecting surface is connected to the second reflecting surface. One end of the second reflecting surface is connected to the first reflecting surface, and another end of the second reflecting surface is close to the laser splitting module.

Further, the first reflecting surface and the second reflecting surface are planar surfaces. The angle between the first reflecting surface and the second reflecting surface is an obtuse angle.

Further, the second reflecting surface is perpendicular to the laser splitting module.

Further, a light-absorbing layer is formed on the first reflecting surface and/or the second reflecting surface.

Further, the emitting module comprises a laser device and a collimating module. The laser device is configured to generate emergent laser signals. The collimating module is configured to collimate the emergent laser signals. The collimating module comprises a fast-axis collimating lens group and a slow-axis collimating lens group. A first emitting diaphragm is arranged at the front side of an emergent end of the collimating module. A second emitting diaphragm is arranged between the fast-axis collimating lens group and the slow-axis collimating lens group.

Further, the first emitting diaphragm is provided with a circular first light-passing hole.

Further, the second emitting diaphragm comprises at least one second emitting sub-diaphragm, and each second emitting sub-diaphragm comprises an upper light blocking block and a lower light blocking block arranged corresponding to the upper light blocking block.

Further, the receiving module comprises a focusing module and a detector. The focusing module is configured to converge the reflected laser signals. The detector is configured to receive the converged reflected laser signals. The focusing module comprises a receiving converging lens group and a receiving correcting lens group. A first receiving diaphragm is arranged between the receiving converging lens group and the receiving correcting lens group. A second receiving diaphragm is arranged at the front side of an emergent end of the focusing module.

Further, the first receiving diaphragm is movable and adjustable in axial and radial directions of an optical axis of the receiving module.

Further, a detachable adjusting base is further provided at the first receiving diaphragm. The first receiving diaphragm is moved and adjusted by clamping the adjusting base. After the first receiving diaphragm is adjusted and fixed, the adjusting base is removed.

Further, the first receiving diaphragm is provided with a circular second light-passing hole. The second receiving diaphragm is provided with a third light-passing hole.

Further, the laser transceiving module further comprises a mirror module between the laser splitting module and the receiving module. The reflected laser signals are reflected by the mirror module to the receiving module after passing through the laser splitting module.

According to another aspect of the present invention, the present invention further provides a LiDAR, comprising at least one forgoing laser transceiving module.

Further, the LiDAR further comprises: a galvanometer assembly configured to receive emergent laser signals emitted from the laser transceiving module, reflect the emergent laser signals outwards, receive reflected laser signals returned coaxially, and direct the reflected laser signals to the laser transceiving module; and a housing assembly comprising a base and an upper housing, wherein a window sheet is formed on the side wall of the upper housing, the galvanometer assembly and the at least one laser transceiving module are arranged in the housing assembly, the emergent laser signals are emitted out through the window sheet, and the reflected laser signals are directed into the housing assembly through the window sheet.

Further, the window sheet is arranged obliquely so that the emergent laser signals reflected by the galvanometer assembly are not perpendicular to the window sheet.

Further, the LiDAR further comprises a mirror lens assembly. The mirror lens assembly comprises mirror lenses, the number of which corresponds to the number of the at least one laser transceiving module. The emergent laser signals emitted from each laser transceiving module are reflected by a corresponding mirror lens and directed to the galvanometer assembly. The reflected laser signals received by the galvanometer assembly directed to the mirror lens, and emitted to the corresponding laser transceiving module after being reflected by the mirror lens.

Further, the LiDAR further comprises a bracket between the laser transceiving module and the mirror lens assembly. A light-passing port is formed at the bracket and is configured to allow the emergent laser signals emitted from the corresponding laser transceiving module and the reflected laser signals received by the corresponding laser transceiving module to pass.

Further, a mounting port for mounting the galvanometer assembly is also formed on the bracket.

Further, a light-absorbing layer is formed at a side of the bracket facing the mirror lens assembly and/or a side of the bracket facing the laser transceiving module.

Further, a galvanometer diaphragm is arranged at the front side of the working surface of the galvanometer assembly, and/or a light-absorbing layer is provided at a base on the working surface of the galvanometer assembly.

Further, light-absorbing layer is provided at the inner surface of the upper housing below the window sheet.

Compared with the prior art, the present invention has the following advantages:

For the laser transceiving module:
1) The extinction structure may effectively prevent part of the laser signals in the emergent laser signals emitted from the emitting module from being reflected by the laser splitting module, and from being scattered by the inner wall of the housing by multiple times, and from becoming stray light directly received by the receiving module, thereby effectively reducing the stray light inside the laser transceiving module.
2) Owing to the arrangement of the first emitting diaphragm and the second emitting diaphragm, that is, the plurality of diaphragms are arranged in the emitting module, the stray light generated by the excess emergent laser signals reflected and scattered by the inner wall of the housing may be restricted as much as possible. Therefore, the stray light inside the laser transceiving module may be further reduced.
3) Owing to the arrangement of the first receiving diaphragm (adjustable in a position) and the second receiving diaphragm, it is possible to limit other laser signals emitting to the detector and reduce the stray light entering the detector without blocking the reflected laser signals.

For the LiDAR,
1) Owing to the inclined arrangement of the window sheet, the emergent laser signals within the full scanning range of the galvanometer assembly are not perpendicular to the window sheet after being reflected by the galvanometer assembly, thereby preventing part of the emergent laser signals from being received by the galvanometer assembly after being reflected by the window sheet, and then from entering the laser transceiving module, which reduces the stray light generated inside the LiDAR and improves the short-distance measurement capability of the LiDAR.
2) A light-passing port arranged on the bracket functions as the diaphragm, and may simultaneously suppress the stray light of an external sun background and suppress the crosstalk between optical path channels of the plurality of internal laser transceiving modules. The light-absorbing layer is arranged at the front and back sides of the bracket, thereby reducing part of light restricted by the bracket to be reflected or scattered by the bracket and then emit to the laser transceiving module, reducing the stray light generated inside the LiDAR and improving the short-distance measurement capability of the LiDAR.
3) Extinction is performed behind the mirror lens assembly, that is, under the window sheet, to prevent the condition when emergent laser signals emitted from the laser transceiving module emit to the mirror lens assembly, part of the emergent laser signals are not received by the mirror lens assembly, but reflected by the inner wall of the upper housing behind the mirror lens assembly and emits towards the laser transceiving module, which may reduce the stray light generated inside the LiDAR.
4) By adding the galvanometer diaphragm with a certain aperture in front of the galvanometer assembly or forming a light-absorbing layer on the base on the working surface, the stray light emitting to the galvanometer assembly may be restricted as much as possible without blocking the emergent laser signals and the reflected laser signals. The stray light generated after the emergent laser signals and the reflected laser signals emitting to the galvanometer assembly are reflected by the base is also reduced.

The laser transceiving module reduces the internal stray light therein. The LiDAR reduces the internal stray light, the external stray light, and the crosstalk among the plurality of laser transceiving modules. A large random noise caused by the external stray light is avoided. The noise of a point cloud is significantly reduced. The ranging ability of the LiDAR is improved. The detector is avoided from being saturated in advance after the internal stray light is received by the receiving module. The reflected laser signals that rapidly return at a close distance cannot be responded. Leading interference is formed to cause a short-distance blind region. The ranging ability and accuracy of the LiDAR are improved. The crosstalk of optical path channels of the plurality of laser transceiving modules inside the LiDAR is reduced. The accuracy of the LiDAR is improved.

### BRIEF DESCRIPTION OF THE DIAGRAMS

FIG. 1 is a perspective view of a structure of a laser transceiving module according to the present invention;
FIG. 2 is a front view of an internal structure of a laser transceiving module shown in FIG. 1;
FIG. 3 is a perspective view of an internal structure of the laser transceiving module shown in FIG. 1;
FIG. 4 is a structural schematic view of a first receiving diaphragm shown in FIG. 3;
FIG. 5 is a working principle view of a first embodiment of a laser transceiving module according to the present invention;
FIG. 6 is a working principle view of a second embodiment of a laser transceiving module according to the present invention;
FIG. 7 is a perspective view of a structure of LiDAR according to the present invention;
FIG. 8 is a structural schematic view of an inner part of LiDAR shown in FIG. 7;
FIG. 9 is a side view of LiDAR shown in FIG. 8;
FIG. 10 is a structural schematic view of a bracket shown in FIG. 8;
FIG. 11 is a structural schematic view of a galvanometer assembly shown in FIG. 8.

### DESCRIPTION OF THE INVENTION

In order to better understand the objectives, structures and functions of the present invention, the following describes the present invention in detail with reference to the drawings.

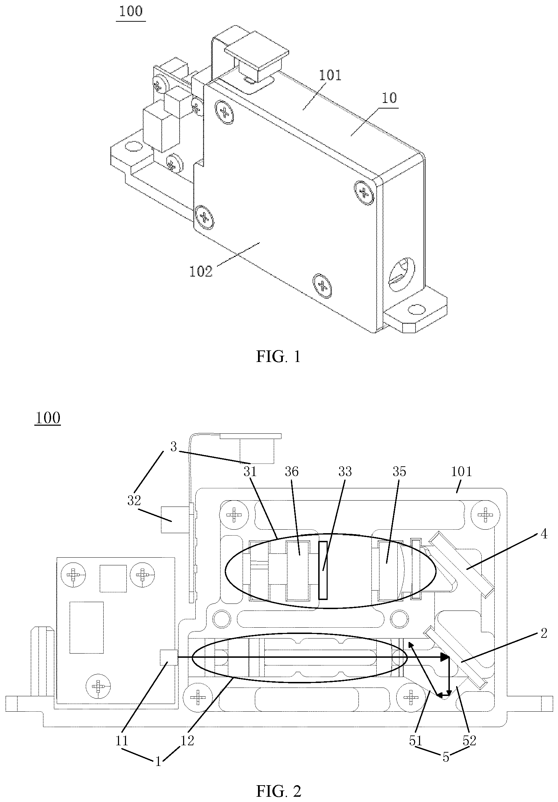

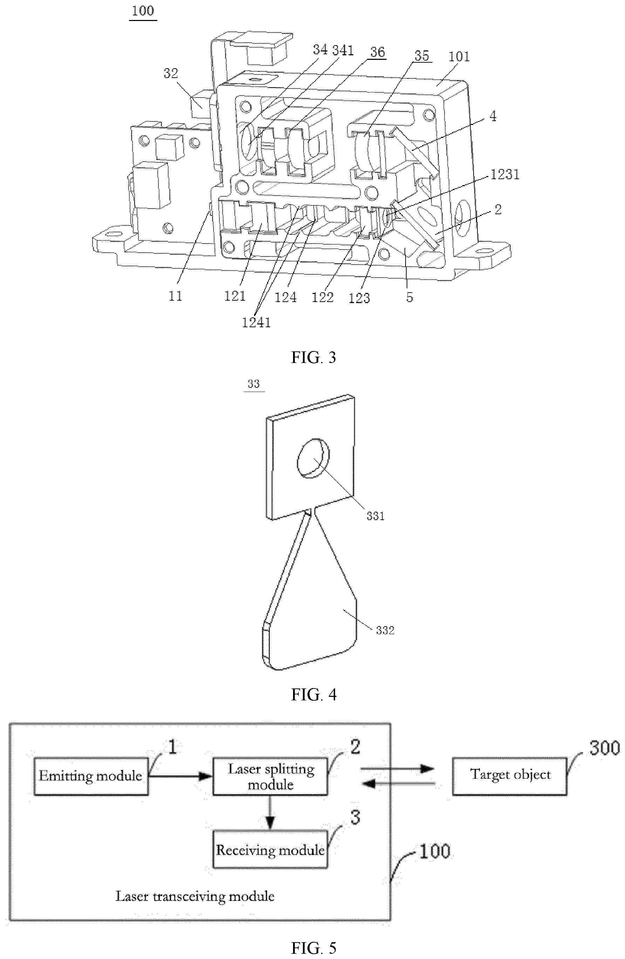

FIGS 1-3 show a structure of a laser transceiving module 100 according to an embodiment of the present invention. As shown in FIG. 5, the laser transceiving module 100 comprises a housing 10, and an emitting module 1, a laser splitting module 2, and a receiving module 3 that are fixed in the housing 10. Emergent laser signals from the emitting module 1 are emitted outwards after passing through the laser splitting module 2, reflected by a target object 300 in a detection region and returned as reflected laser signals. The reflected laser signals are received and deflected by the laser splitting module 2 and then received by the receiving module 3. An extinction structure 5 is arranged between the emitting module 1 and the laser splitting module 2. The extinction structure 5 is configured to prevent the emergent laser signals reflected by the laser splitting module 2 from projecting toward the receiving module 3.

In the laser transceiving module 100 of the embodiment of the present invention, the laser splitting module 2 serves as a hub connecting the emitting module 1 and the receiving module 3 to realize the coaxial transceiving of the laser transceiving module 100. If stray light is generated at the laser splitting module 2, the stray light easily emits to the receiving module 3 via an optical channel connecting the laser splitting module 2 and the receiving module 3. Owing to the arrangement of the extinction structure 5 between the emitting module 1 and the laser splitting module 2, it is possible to effectively prevent part of the laser emitted from the emitting module 1 from being reflected by the laser splitting module 2, from being scattered by the inner wall of the housing 10 by multiple times and from becoming stray light directly received by the receiving module 2. Therefore, the stray light inside the laser transceiving module 100 may be effectively reduced. A short-distance blind region caused by leading interference is avoided, thereby reducing the impact of the stray light on the ranging capability and accuracy of the laser transceiving module 100.

According to the present invention, the extinction structure 5 may have a plurality of structural forms. For example, the structural forms may be a reflecting surface of any shape, as long as the extinction structure 5 may prevent the emergent laser signals reflected by the laser splitting module 2 from emitting to the receiving module 3. The extinction structure 5 may further comprise a light-absorbing layer provided on the reflecting surface, thereby avoiding the extinction structure 5 from reflecting or scattering the emergent laser signals to generate the stray light.

In some embodiments, the extinction structure 5 may be at least one reflecting surface. As shown in FIGS. 2 and 3, the extinction structure 5 may be arranged at the housing 10. The extinction structure 5 comprises a first reflecting surface 51 and a second reflecting surface 52 arranged at an angle with respect to the first reflecting surface. One end of the first reflecting surface 51 is close to the emitting module 1, and another end thereof is connected to the second reflecting surface 52. One end of the reflecting surface 52 is connected to the first reflecting surface 51, and another end thereof is close to the laser splitting module 2. That is, the first reflecting surface 51 and the second reflecting surface 52 may be V-shaped as shown in FIG. 4. Part of the emergent laser signals reflected by the laser splitting module 2 emits toward the extinction structure 5, that is, emits toward the first reflecting surface 51 and/or the second reflecting surface 52. The part of the emergent laser signals reflected by the first reflecting surface 51 and the second reflecting surface 52 obliquely emits to the emitting module 1 or the laser splitting module 2, and does not enter the receiving channel to emit to the receiving module 3, thereby reducing the internal stray light received by the receiving module 3.

It is worth noting that the first reflecting surface 51 and the second reflecting surface 52 may be flat, curved or irregular surfaces, as long as it may ensure that the stray light emitting to the receiving module 3 may be effectively eliminated after the emergent laser signals reflected by the laser splitting module 2 are reflected or absorbed by the first reflecting surface 51 and the second reflecting surface 52 when the emergent laser signals emit to the first reflecting surface 51 and the second reflecting surface 52. The magnitude of the stray light emitting to the receiving module 3 may be reduced.

In some embodiments as shown in FIGS. 2 and 3, the first reflecting surface 51 and the second reflecting surface 52 are planar surfaces. An included angle between the first reflecting surface 51 and the second reflecting surface 52 is an obtuse angle. As shown in FIG. 3, the laser splitting module 2 is a polarizing laser splitting flat sheet obliquely arranged at an angle of 45°. P-polarized light in the emergent optical signals may pass through the polarizing laser splitting flat sheet and emit outwards. S-polarized light in the reflected optical signals is reflected by the polarization light splitting flat sheet and then emits toward the receiving module 3, so as to realize the laser splitting of the emergent laser signals and the reflected laser signals. The laser splitting module 2 may also be a polarizing laser splitter, a mirror with a central circular hole or a combined laser splitter (that is, the polarizing laser splitting sheet is provided at the circular hole of the mirror). The emergent laser signals propagate in a horizontal direction and emit toward the laser splitting module 2 at an incident angle of 45°. A part of the emergent laser signals reflected by the laser splitting module 2 propagate down in a vertical direction and emit toward the second reflecting surface 52. Since an included angle between the first reflecting surface 51 and the second reflecting surface 52 is an obtuse angle, the part of the laser signals emitting to the second reflecting surface 52 is either reflected directly to the emitting module 1, or reflected to the second reflecting surface 51, and further reflected toward the emitting module 1. Owing to this arrangement, it is avoided that part of the emergent laser signals are reflected by the extinction structure 5 and then emit to the laser splitting module 2, and then emit to the receiving module 3 via a channel connecting the laser splitting module 2 and the receiving module 3, thereby greatly reducing the internal stray light emitting to the receiving module 3.

Preferably, the included angle between the first reflecting surface 51 and the second reflecting surface 52 may range from 110° to 130°. Further preferably, the included angle between the first reflecting surface 51 and the second reflecting surface 52 may range from 115° to 120°.

Further preferably, the second reflecting surface 52 may be perpendicular to the laser splitting module 2. As mentioned above, the emergent laser signals emit to the laser splitting module 2 at an incident angle of 45°. A part of the emergent laser signals reflected by the laser splitting module 2 propagate down in a vertical direction and emit to the second reflecting surface 52. Since the second reflecting surface 52 is perpendicular to the laser splitting module 2, part of the emergent laser signals are reflected by the second reflecting surface 52, then propagate in the horizontal direction, and emit to the first reflecting surface 51. The included angle between the first reflecting surface 51 and the second reflecting surface 52 is an obtuse angle. Part of the emergent laser signals propagating in the horizontal direction enter the first reflecting surface 51 at a large incident angle, then are reflected by the first reflecting surface 51 and emit to the emitting module 1, thereby avoiding the internal stray light from emitting to the laser splitting module 2 and the receiving module 3.

Further preferably, the projection of the working area on a horizontal plane where the laser splitting module 2 receives the emergent laser signals does not exceed the projection area of the second reflecting surface 52 on the horizontal plane. In this way, the part of the emergent laser signals reflected by the laser splitting module 2 emit to the second reflecting surface 52 and do not emit to the first reflecting surface 51. According to the forgoing reflecting path, all internal stray light finally emits to the emitting module 1 and has no effect on the receiving module 3.

Further preferably, to further reduce the internal stray light generated by laser reflecting or scattering on the first reflecting surface 51 and/or the second reflecting surface 52, the light-absorbing layer (not shown in the figure) is formed on the first reflecting surface 51 and/or the second reflecting surface 52. The light-absorbing layer may be any one of a light-absorbing paper, a light-absorbing film, and an extinction paint.

In some embodiments, the extinction structure 5 may also be the light-absorbing layer. The light-absorbing layer (not shown in the figure) is provided on a region between the emitting module 1 and the laser splitting module 2. The light-absorbing layer may be any one of a light-absorbing paper, a light-absorbing film, and an extinction paint. Part of the emergent laser signals reflected by the laser splitting module 2 emit to the light-absorbing layer. Part of the emergent laser signals are absorbed by the light-absorbing layer. No internal stray light is reflected on the extinction structure 5 and then emits upward to the receiving module 3.

In some embodiments, as shown in FIG. 2, the emitting module 1 may comprise a laser device 11 and a collimating module 12. The laser device 11 is configured to generate the emergent laser signals, and the collimating module 12 is configured to collimate the emergent laser signals. As shown in FIG. 3, the collimating module 12 comprises a fast-axis collimating lens group 121 and a slow-axis collimating lens group 122. A first emitting diaphragm 123 is arranged at the front side of the emitting end of the collimating module 12. A second emitting diaphragm 124 is arranged between the fast-axis collimating lens group 121 and the slow-axis collimating lens group 122. Because the emergent laser signals have a certain diffusion angle when emitting, the laser does not emit completely in parallel. After the emergent laser signals propagate for a certain distance, part of marginal laser emits to the side wall of the housing 10 of an emitting channel, and is reflected or reflected by a plurality of times, emits to the receiving module 3 and becomes the internal stray light. Therefore, the first emitting diaphragm 123 and the second emitting diaphragm 124 are arranged to limit the internal stray light on a propagation path of the non-emergent laser signals, thereby achieving the objective of further reducing the stray light inside the laser transceiving module 100. It is worth noting that the specific position of the second emitting diaphragm 124 may be specifically arranged according to the specific conditions of the emergent laser, which is not specifically limited herein.

Further, as shown in FIG. 3, the second emitting diaphragm 124 may comprise at least one second emitting sub-diaphragm 1241. Each second emitting sub-diaphragm 1241 comprises upper and lower light blocking blocks arranged correspondingly. A fast-axis direction of the emergent laser signals passing through the fast-axis collimating lens group 121 is collimated, but a slow-axis direction still has a diffusion angle. Therefore, the upper and lower light blocking blocks arranged correspondingly serves as the second emitting sub-diaphragm 1241 to limit the internal stray light generated by the slow-axis direction. Owing to the arrangement of the plurality of second emitting sub-diaphragms 1241, the internal stray light may be restricted more effectively inside the emitting module 1. Generally, more than two second emitting sub-diaphragms 1241 may limit 95% of the internal stray light. Preferably, considering the effect of the diaphragm and processing complexity, two second emitting sub-diaphragms 1241 are provided between the fast-axis collimating lens group 121 and the slow-axis collimating lens group 122.

Further, the first emitting diaphragm 123 may be provided with a circular first light-passing hole 1231. The emergent laser signals emit to the laser splitting module 2 via the first light-passing hole 1231 of the first emitting diaphragm 123. Similar to the forgoing second emitting diaphragm 124, the first emitting diaphragm 123 is configured to limit the internal stray light on the propagation path of the non-emergent laser signals, thereby achieving the objective of further reducing the stray light inside the laser transceiving module 100. The emergent laser signals that pass through the collimating module 12 are almost parallel emergent laser. The cross-section of the emergent laser signals is a circular spot, which just passes through the first light-passing hole 1231.

In addition, optionally, the laser device 11 may comprise any of a semiconductor laser device, and a fiber laser device. The collimating module may comprise any of a ball lens, a ball lens group, a cylindrical lens group, a cylindrical lens plus a ball lens group, and a non-spherical lens or a gradient index lens.

In some embodiments, as shown in FIG. 2, the receiving module 3 may comprise a focusing module 31 and a detector 32. The focusing module 31 is configured to converge the reflected laser signals. The detector 32 is configured to receive the converged reflected laser signals. The focusing module 31 comprises a receiving converging lens group 35 and a receiving correcting lens group 36. As shown in FIG. 4, a first receiving diaphragm 33 may be arranged between the receiving converging lens group 35 and the receiving correcting lens group 36. As shown in FIG. 3, the focusing module 31 may be provided with the second receiving diaphragm 34 at the front side of the emergent end thereof. The first receiving diaphragm 33 and the second receiving diaphragm 34 are arranged to limit the internal stray light on a propagation path of non-reflected laser signals, thereby achieving the objective of further reducing the internal stray light of the laser transceiving module 100. The first receiving diaphragm 33 and the second receiving diaphragm 34 do not affect the detector 32 to normally receive the reflected laser signals.

Further, the first receiving diaphragm 33 may be provided with a circular second light-passing hole 331. The second receiving diaphragm 34 may be provided with a third light-passing hole 341. The reflected laser signals are converged by the receiving converging lens group 35 and then emitted to the receiving correcting lens group 36. The diameter of the second light- passing hole 331 matches the diameter of the converged reflected laser signal, so that the normally received reflected laser signals may enter the receiving correcting lens group 36 after being converged. The size of the third light-passing hole 341 matches the size of an optical spot of the converged and corrected reflected laser signals, so that both the converged and corrected reflected laser signals may emit to the detector 32. Optionally, the third light-passing hole 341 may be circular, elliptical, rounded square, etc., as long as the shape of the third light-passing hole 341 matches the shape of the photosensitive surface of the detector 32.

In addition, optionally, the focusing module 31 may comprise any one of a ball lens, a ball lens group, and a cylindrical lens group. The detector 32 may be an Avalanche Photo Diode (APD), a Silicon photomultiplier (SiPM), an APD array, a Multi-Pixel Photon Counter (MPPC), a Photomultiplier Tube (PMT), a Single-photon Avalanche Diode (SPAD), etc.

In one preferred embodiment, the first receiving diaphragm 33 may be configured to be movable and adjustable in axial and radial directions of a central optical axis of the receiving module 3. The collimating module 12, the laser splitting module 2, and the focusing module 31 are all fixed in the respective mounting positions thereof. Due to processing errors and assembly errors, the central optical axis of the reflected laser signals passing through the receiving converging lens group 35 and the central optical axis of the receiving correcting lens group 36 are very likely to be non-collinear. At this time, if the first receiving diaphragm 33 is directly mounted and fixed so that the center of the first receiving diaphragm 33 is positioned on the central optical axis of the receiving correcting lens group 36. Part of the normally received reflected laser signals are blocked by the first receiving diaphragm 33 and may not be received by the detector 32, which greatly affects the receiving efficiency as well as the ranging ability and detection accuracy of the LiDAR. Therefore, the first receiving diaphragm 33 is arranged to be adjustable in the axial and radial directions of the central optical axis so that the reflected laser signals have the best receiving effect. Alternatively, a threshold value may be set. When the first receiving diaphragm 33 is adjusted so that the received reflected laser signals exceeds the threshold, the adjustment is considered complete.

Preferably, as shown in FIG. 4, a detachable adjusting base 332 is also provided at the first receiving diaphragm 33. The first receiving diaphragm 33 is moved and adjusted by clamping the adjusting base 332. After the first receiving diaphragm 33 is adjusted and fixed, the adjusting base 332 is removed. The first receiving diaphragm 33 is moved and adjusted by clamping the adjusting base 332 to prevent the deformation, damage or contamination caused by directly clamping the body of the first receiving diaphragm 33. After the adjustment is completed and the first receiving diaphragm 33 is fixed, the adjusting base 332 is removed. As shown in FIG. 1, the housing 10 may comprise a bottom case 101 and a side cover 102. After the emitting module 1, the laser splitting module 2 and the receiving module 3 are mounted and fixed at the bottom case 101, the side cover 102 is covered, so that the emitting module 1, the laser splitting module 2 and the receiving module 3 are positioned in a cavity encircled by the bottom case 101 and the side cover 102. Therefore, after the adjusting base 332 is removed, the side cover 102 is mounted to complete the assembly of the laser transceiving module 100.

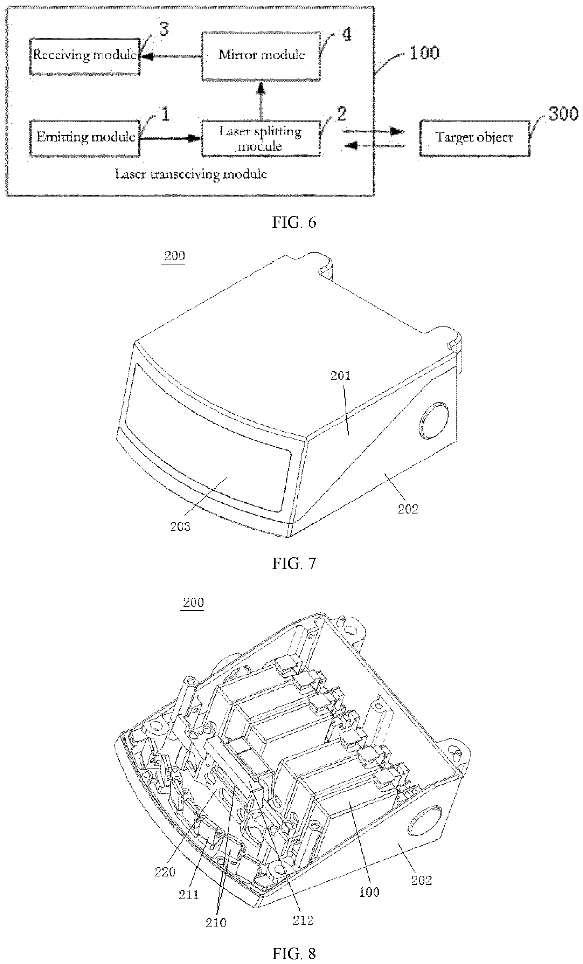

In some embodiments, as shown in FIGS. 2 and 3, the laser transceiving module 100 may further comprise a mirror module 4 between the laser splitting module 2 and the receiving module 3. As shown in FIG. 6, after the reflected laser signals pass through the laser splitting module 2, the reflected laser signals are reflected by the mirror module 4 to the receiving module 3.

Preferably, as shown in FIG. 2, an optical axis of the reflected laser signals passing through the mirror module 4 may be parallel to an optical axis of the emergent laser signals. This arrangement may realize the folding and compression of the receiving optical path, and reduce the length of a space occupied by each module, so that the structure of the laser transceiving module 100 is more compact. Of course, the optical axis of the reflected laser signals passing through the mirror module 4 may also be at a certain angle with the optical axis of the emergent laser signals. This embodiment is not limited thereto, as long as the reflected laser signals passing through the mirror module 4 may be guaranteed to enter the receiving module 3.

FIGS 7-9 show a structural schematic diagram of a LiDAR 200 according to an embodiment of the present invention. As shown in FIGS. 7-9, the LiDAR 200 comprises at least one forgoing laser transceiving module 100.

In a preferred embodiment shown in FIGS. 7-9, the LiDAR 200 further comprises: a galvanometer assembly 212 configured to receive emergent laser signals emitted from the laser transceiving module, and reflect the emergent laser signals outwards for scanning, and is further configured to receive the reflected laser signals returned coaxially, and direct the reflected laser signals to the laser transceiving module 100; and a housing assembly comprising a base 202 and an upper housing 201, wherein a window sheet 203 is formed on the side wall of the upper housing 201, the galvanometer assembly 212 and the at least one laser transceiving module 100 are arranged in the housing assembly, the emergent laser signals are emitted out through the window sheet 203, and the reflected laser signals are directed into the inside of the housing assembly through the window sheet 203.

Preferably, the window sheet 203 may be arranged obliquely, so that the emergent laser signals emitting after being reflected by the galvanometer assembly 212 is not perpendicular to the window sheet 203. Since the window sheet 203 has a certain mirror reflection, if the emergent laser signals emitting after being reflected by the galvanometer assembly 212 is perpendicular to the window sheet 203, part of the emergent laser signals reflected by a mirror also return by being perpendicular to the window sheet 203 and emit to the galvanometer assembly 212. Part of the emergent laser signals become stray light. The stray light enters the laser transceiving module 100 via the galvanometer assembly 212, and is received by the receiving module 3 in the laser transceiving module, resulting in a short-distance blind region, which affects the ranging ability and accuracy of the LiDAR 200. Therefore, the window sheet 203 is arranged obliquely so that the emergent laser signals are not perpendicular to the window sheet 203. Part of the emergent laser signals reflected by the window sheet 203 emit in other directions, and do not return to an original path to be received by the galvanometer assembly 212 and enter the laser transceiving module 100.

Further preferably, as shown in FIG. 7, the window sheet 203 is arranged obliquely downward. It is less possible that part of the emergent laser signals reflected by the window sheet 203 emit downward, and are reflected or scattered by other structures in the housing assembly to enter the laser transceiving module 100.

It is worth noting that the shape of the window sheet 203 may be flat or curved, as long as it may ensure that the emergent laser signals within a scanning range of the galvanometer assembly 212 is not perpendicular to the window sheet 203, which has no specific limitation here. Preferably, the shape of the window sheet 203 is a curved surface. Under the premise that the emergent laser signal and the reflected laser signal may not be blocked in the overall field of view of the LiDAR 200, the width of the window sheet 203 is compressed as much as possible, thereby providing a prerequisite for compressing the overall volume of the LiDAR 200.

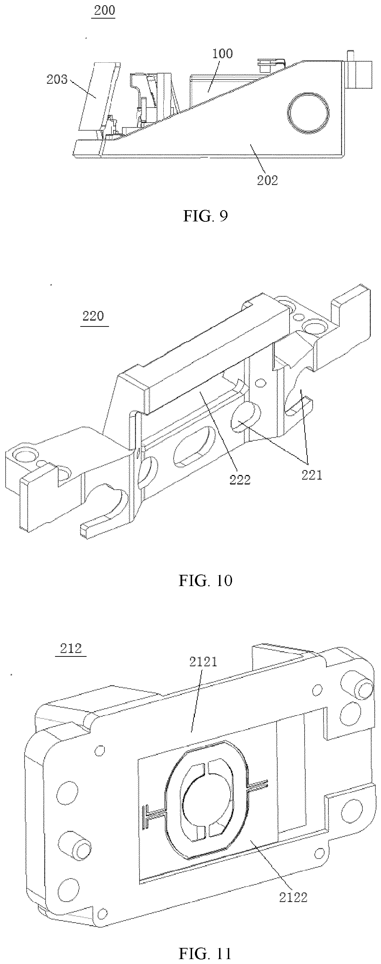

In a preferred embodiment shown in FIG. 8 and FIG. 9, the LiDAR 200 further comprises a mirror lens assembly 211. The mirror lens assembly 211 comprises mirror lenses, the number of which corresponds to the number of the laser transceiving modules 100. The emergent laser signals emitted from each laser transceiving module 100 are reflected by the corresponding mirror lens and then emit to the galvanometer assembly 212. The reflected laser signals received by the galvanometer assembly 212 emit to the mirror lens, and emit to the corresponding laser transceiving module 100 after being reflected by the mirror lens. The mirror lens assembly 211 may be configured to fold an optical path, so as to achieve the objective of reducing the volume of the LiDAR 200.

Specifically, the emergent laser signals of the laser transceiving module 100 emit to the corresponding mirror lens, and then emit to the galvanometer assembly 212. The galvanometer assembly 212 emits outwards and scans the emergent laser signals. The reflected laser signals reflected by a target object 300 are received by the galvanometer assembly 212 and emitted to the mirror lens. The mirror lens reflects and emits the reflected laser signals to the corresponding laser transceiving module 100. The transceiving module 100 receives the reflected laser signals.

Further, as shown in FIGS. 8-10, the LiDAR 200 further comprises a bracket 220 between the laser transceiving module 100 and the mirror lens assembly 211, and a light-passing port 221 is formed at the bracket 220 and is configured to allow the emergent laser signals emitted from the corresponding laser transceiving module 100 and the reflected laser signals received by the corresponding laser transceiving module 100 to pass. The specific shape of the light-passing port 221 on the bracket 220 may be designed according to the optical path, and the number thereof may be the same as the number of the laser transceiving modules 100 and correspond to each laser transceiving module 100, respectively. The light-passing port 221 may function as a diaphragm so that light passes through propagation optical paths of the emergent laser signals emitted from the laser transceiving module 100 and the reflected laser signals received by the laser transceiving module 100. Internal stray light outside the normal propagation optical path and background light entering from outside and other radar interference light (that is, external stray light) are restricted. Propagation directions of the internal stray light and the external stray light often do not follow optical path directions of the normally propagating emergent laser signals and reflected laser signals, which may suppress the external background light, other radar interference light, and the internal stray light.

In addition, the emergent laser signals are reflected by a target object 300 in a detection area and then return the reflected laser signals. Since the target object 300 usually produces diffuse reflection, an optical spot of the reflected laser signals has a diameter larger than that of the emergent laser signals. A central optical axis of the received optical signals is aligned with the corresponding laser transceiving module 100. In addition, marginal laser may emit to the adjacent laser transceiving module 100, thereby causing crosstalk between the channels of different laser transceiving modules 100. The light-passing port 221 restricts the beam of the reflected laser signals emitting to the laser transceiving module 100, thereby suppressing mutual crosstalk between internal channels, and improving the detection accuracy of the LiDAR 200.

Preferably, a mounting port 222 for mounting the galvanometer assembly 212 may also be formed on the bracket 220. It is worth noting that a galvanometer bracket for mounting the galvanometer assembly 212 may be a mounting bracket different from the bracket 220. In this embodiment, the mounting port 222 for mounting the galvanometer assembly 212 is provided on the bracket 220 at the same time, so that the galvanometer bracket for mounting the galvanometer assembly 212 is integrated with a light-passing bracket through which light passes, reducing the number of parts, simplifying a structure, and reducing the difficulty and complexity of assembly.

According to the present invention, a light-absorbing layer (not shown in the figure) is formed on a side of the bracket 220 facing the mirror lens assembly 211 and/or a side of the bracket 220 facing the laser transceiving module 100. As mentioned above, the bracket 220 is provided with the light-passing port 221. The light-passing port 221 is configured to limit the stray light outside the optical paths of the emergent laser signals and the reflected laser signals, so that part of the light shall emit to the bracket 220. The arrangement of the light-absorbing layer may reduce part of the light restricted by the bracket 220 to be reflected or scattered by the bracket 220 to emit to the laser transceiving module 100 to become new stray light, thereby reducing the stray light generated inside the LiDAR 200 and improving short-distance ranging capability.

Further, as shown in FIG. 11, the galvanometer diaphragm (not shown in the figure) is arranged at the front side of the working surface 2122 of the galvanometer assembly 212, and/or the light-absorbing layer (not shown in the figure) is provided on a base on the working surface 2121 of the galvanometer assembly 212.

Preferably, the galvanometer assembly 212 may comprise a Micro-Electro-Mechanical System (MEMS) galvanometer. The MEMS galvanometer comprises a mirror and a base. The mirror is connected to the base via a connecting bridge. The working surface of the MEMS galvanometer consists of the mirror part and the base. The surface of the material (may be silicon) of the base is relatively smooth, and may cause reflecting or scattering. As mentioned above, the diameter of the optical spot of the reflected laser signals is larger, and often larger than the area of the mirror. Therefore, part of marginal laser of the reflected laser signals emits to the base. This part of the reflected laser signals are reflected by the base and emit to the laser transceiving module 100 to become the internal stray light. Therefore, the galvanometer diaphragm with a certain aperture is arranged in front of the MEMS galvanometer or the light-absorbing layer is formed on the base. Therefore, the size and direction of the optical spot of the reflected laser signals emitting to the MEMS galvanometer are limited while ensuring that the emergent laser signals and the reflected laser signals are not blocked. The stray light emitting to the MEMS galvanometer is removed while limiting the size of the optical spot of the reflected laser signals emitting to the MEMS, so that most of laser of the reflected laser signals falls on the mirror. In addition, the light-absorbing layer is provided on the base. Even if part of the laser falls on the base, the light-absorbing layer will absorb this part of the laser, which is not further reflected to become the stray light. Preferably, the light-absorbing layer may be any one of a light-absorbing paper, a light-absorbing film, and an extinction dope.

According to the present invention, the light-absorbing layer (not shown in the figure) may be provided in a region of the inner side of the upper housing 201 under the window sheet 203. Due to the limited area of the mirror of a mirror assembly 211, and because the emergent laser signals and the reflected laser signals emitting to the mirror assembly 211 cannot be completely received by the mirror assembly 211, especially for the reflected laser signals with a larger diameter of the optical spot, the rear of the mirror assembly 211, that is, the region of the housing assembly under the window sheet 203, needs the extinction processing to prevent the emergent laser signals and the reflected laser signals that are not received by the mirror lens assembly 211 from being reflected by the inner wall of the upper housing 201 behind the mirror lens assembly 211 to form the stray light, thereby reducing the stray light generated inside the LiDAR 200. Preferably, the light-absorbing layer may comprise the light-absorbing paper, the light-absorbing film, or the extinction dope.

The laser transceiving module of the present application reduces the internal stray light, and the LiDAR reduces the internal stray light, the external stray light, and crosstalk between the plurality of laser transceiving modules. A large random noise caused by the external stray light is avoided. The noise of a point cloud is significantly reduced. The ranging ability of the LiDAR is improved. The detector is avoided from being saturated in advance after the internal stray light is received by the receiving module. The reflected laser signals that rapidly return at a close distance cannot be responded. Leading interference is formed to cause a short-distance blind region. The ranging ability and accuracy of the LiDAR are improved. The crosstalk of optical path channels of the plurality of laser transceiving modules inside the LiDAR is reduced. The accuracy of the LiDAR is improved.

It should be noted that unless otherwise specified, the technical or scientific terms used in the present invention should have general meanings understood by the person skilled in the art to which the present invention belongs.

In the description of the present invention, it shall be understood that the terms such as "first" and "second" are merely intended for a purpose of description, and shall not be understood as an indication or implication of relative importance or implicit indication of a quantity of indicated technical features. In the description of the present invention, "a plurality of" means two or more, unless otherwise specifically defined.

Finally, it should be noted that the foregoing embodiments are intended for describing instead of limiting the technical solutions of the present invention. Although the present invention is described in detail with reference to the foregoing embodiments, the person skilled in the art should understand that modifications may be made to the technical solutions described in the foregoing embodiments or equivalent replacements may be made to some or all technical features thereof, without departing from the scope of the technical solutions. All these modifications or replacements shall fall within the scope of the claims and specification of the present invention. Particularly, the technical features mentioned in all embodiments may be combined in any manner, provided that no structural conflict occurs. The present invention is not limited to the specific embodiments disclosed in this specification, but comprises all technical solutions that fall within the scope of the claims.

## Claims

1. A laser transceiving module, comprising a housing, an emitting module, a laser splitting module, and a receiving module that are fixed in the housing, wherein: emergent laser signals from the emitting module are emitted outwards after passing through the laser splitting module, reflected by a target object in a detection region and returned as reflected laser signals; the reflected laser signals are received and deflected by the laser splitting module and received by the receiving module; and an extinction structure is arranged between the emitting module and the laser splitting module and is configured to prevent the emergent laser signals reflected by the laser splitting module from projecting to the receiving module.

2. The laser transceiving module according to claim 1, wherein the extinction structure is arranged on the housing and comprises a first reflecting surface and a second reflecting surface arranged at an angle with respect to the first reflecting surface, wherein one end of the first reflecting surface is close to the emitting module, and another end of the first reflecting surface is connected to the second reflecting surface, and wherein one end of the second reflecting surface is connected to the first reflecting surface, and another end of the second reflecting surface is close to the laser splitting module.

3. The laser transceiving module according to claim 2, wherein the first reflecting surface and the second reflecting surface are planar surfaces, and the angle between the first reflecting surface and the second reflecting surface is an obtuse angle.

4. The laser transceiving module according to claim 3, wherein the second reflecting surface is perpendicular to the laser splitting module.

5. The laser transceiving module according to claim 2, wherein a light-absorbing layer is formed on the first reflecting surface and/or the second reflecting surface.

6. The laser transceiving module according to any one of claims 1 to 5, wherein the emitting module comprises a laser device and a collimating module, the laser device is configured to generate the emergent laser signals, the collimating module is configured to collimate the emergent laser signals, the collimating module comprises a fast-axis collimating lens group and a slow-axis collimating lens group, a first emitting diaphragm is arranged at a front side of an emergent end of the collimating module, and a second emitting diaphragm is arranged between the fast-axis collimating lens group and the slow-axis collimating lens group.

7. The laser transceiving module according to claim 6, wherein the first emitting diaphragm is provided with a circular first light-passing hole.

8. The laser transceiving module according to claim 6, wherein the second emitting diaphragm comprises at least one second emitting sub-diaphragm, and each second emitting sub-diaphragm comprises an upper light blocking block and a lower light blocking block arranged corresponding to the upper light blocking block.

9. The laser transceiving module according to any one of claims 1 to 5, wherein the receiving module comprises a focusing module and a detector, the focusing module is configured to converge the reflected laser signals, the detector is configured to receive the converged reflected laser signals, the focusing module comprises a receiving converging lens group and a receiving correcting lens group, a first receiving diaphragm is arranged between the receiving converging lens group and the receiving correcting lens group, and a second receiving diaphragm is arranged at a front side of an emergent end of the focusing module.

10. The laser transceiving module according to claim 9, wherein the first receiving diaphragm is movable and adjustable in axial and radial directions of an optical axis of the receiving module.

11. The laser transceiving module according to claim 10, wherein a detachable adjusting base is provided at the first receiving diaphragm, the first receiving diaphragm is moved and adjusted by clamping the adjusting base, and after the first receiving diaphragm is adjusted and fixed, the adjusting base is removed.

12. The laser transceiving module according to claim 9, wherein the first receiving diaphragm is provided with a circular second light-passing hole, and the second receiving diaphragm is provided with a third light-passing hole.

13. A LiDAR, comprising at least one laser transceiving module according to any one of claims 1 to 12.

14. The LiDAR according to claim 13, further comprising:
a galvanometer assembly configured to receive the emergent laser signals emitted from the laser transceiving module, reflect the emergent laser signals outwards, receive reflected laser signals returned coaxially, and direct the reflected laser signals to the laser transceiving module; and
a housing assembly comprising a base and an upper housing, wherein a window sheet is formed on a side wall of the upper housing, the galvanometer assembly and the at least one laser transceiving module are arranged in the housing assembly, the emergent laser signals are emitted outwards through the window sheet, and the reflected laser signals are directed into the housing assembly through the window sheet.

15. The LiDAR according to claim 14, wherein the window sheet is arranged obliquely so that the emergent laser signals reflected by the galvanometer assembly are not perpendicular to the window sheet.

16. The LiDAR according to claim 14 or 15, further comprising a mirror lens assembly, wherein the mirror lens assembly comprises mirror lenses, a number of the mirror lenses corresponding to a number of the at least one laser transceiving module, the emergent laser signals emitted from each laser transceiving module are reflected by a corresponding mirror lens and directed to the galvanometer assembly, and the reflected laser signals received by the galvanometer assembly are emitted to the mirror lens, and directed to the corresponding laser transceiving module after being reflected by the mirror lens.

17. The LiDAR according to claim 16, further comprising a bracket between the laser transceiving module and the mirror lens assembly, wherein a light-passing port is formed at the bracket and is configured to allow the emergent laser signals emitted from the corresponding laser transceiving module and the reflected laser signals received by the corresponding laser transceiving module to pass through.

18. The LiDAR according to claim 17, wherein a light-absorbing layer is formed at a side of the bracket facing the mirror lens assembly and/or a side of the bracket facing the laser transceiving module.

19. The LiDAR according to claim 14 or 15, wherein a galvanometer diaphragm is arranged on a front side of a working surface of the galvanometer assembly, and/or a light-absorbing layer is provided on a base on the working surface of the galvanometer assembly.

20. The LiDAR according to claim 14 or 15, wherein a light-absorbing layer is provided on an inner surface of the upper housing below the window sheet.
